Europäisches Patentamt

European Patent Office

Office européen des brevets

(11) Numéro de publication: **0 362 033**
**A1**

## DEMANDE DE BREVET EUROPEEN

(21) Numéro de dépôt: 89402597.2

(22) Date de dépôt: 22.09.89

(51) Int. Cl.5 **B62K 15/00 , B62M 7/12**

(30) Priorité: 27.09.88 FR 8812618

(43) Date de publication de la demande:
04.04.90 Bulletin 90/14

(84) Etats contractants désignés:
AT BE CH DE ES FR GB GR IT LI LU NL SE

(71) Demandeur: **Le Moing, Tanguy**
**63, rue Daguerre**
**F-75014 Paris(FR)**

Demandeur: **Moreau, Luc**
**68, rue Carnot**
**F-92150 Suresnes(FR)**

(72) Inventeur: **Le Moing, Tanguy**
**63, rue Daguerre**
**F-75014 Paris(FR)**
Inventeur: **Moreau, Luc**
**68, rue Carnot**
**F-92150 Suresnes(FR)**

(74) Mandataire: **Levy, David et al**
**c/o S.A. FEDIT-LORIOT & AUTRES CONSEILS**
**EN PROPRIETE INDUSTRIELLE 38, Avenue**
**Hoche**
**F-75008 Paris(FR)**

(54) Véhicule motorisé à deux roues pliant et portable.

(57) Ce véhicule motorisé pliant à deux roues, dont une roue arrière motorisée, comprend :
- un premier moyen d'articulation (103) horizontale transversale prévu sur la plate-forme (102) - un second moyen d'articulation (159) horizontale transversale du montant de guidon,
- un troisième moyen d'articulation et de rabattement du guidon (116), moyennant quoi, en passant de l'état monté à l'état plié, on rapproche les roues avant (119) et arrière (120) au voisinage l'une de l'autre par l'articulation de la plate-forme et celle du montant (160) de guidon, tandis qu'on escamote grâce aux second et troisième moyens le guidon (116), de sorte qu'à l'état plié, la plus grande dimension du véhicule est sensiblement celle qui est prise entre les points les plus éloignés des roues rapprochées (119;120).

FIG.10

# VEHICULE MOTORISE A DEUX ROUES PLIANT ET PORTABLE

L'invention concerne un véhicule motorisé individuel à deux roues, du genre "patinette motorisée".

De tels engins, qu'on conduit debout, constitués d'un plateau, de roues garnies de pneumatiques et d'un moteur entraînant la roue avant ou arrière, sont connus depuis fort longtemps (depuis au moins les années 1910 environ).

Depuis ces engins primitifs, le besoin s'est fait sentir de disposer de véhicules qui puissent aisément être pliés, pour être transportés plus facilement sur leur lieu d'utilisation.

Un tel concept, de patinette motorisée transportable, est développé par exemple dans les documents EP-A-300 650, GB-A-2 116 495, FR-A-2 617 455, ou FR-A-2 478 569. Ces propositions, souvent purement spéculatives, souffrent d'inconvénients divers. En particulier, elles utilisent toutes des mini-roues dans le but de parvenir à la compacité désirée, mais cela se fait au prix notamment de l'inconfort du passager.

Le but de l'invention est de proposer une patinette motorisée qui soit aisément repliable et transportable, mais ne présente pas les inconvénients de la technique antérieure et notamment possède des roues de relativement grand diamètre.

La patinette de l'invention est du type connu par le document EP-A-300 650, comprenant :
- une plate-forme coudée centrale allongée sur laquelle peuvent reposer les pieds d'un conducteur, comportant une première partie horizontale reliée à l'avant par un coude à une seconde partie oblique, la partie horizontale comportant à l'arrière des moyens de montage d'une roue arrière motorisée, la partie oblique étant reliée à l'avant à une colonne de direction, la roue motorisée étant entraînée par un moteur placé à proximité,
- la colonne de direction, dans laquelle est monté l'axe d'une fourche avant équipée d'une roue avant et un montant de guidon solidaire en rotation de la fourche et muni à sa partie supérieure d'un guidon de direction,
- des moyens de pliage et de blocage du véhicule permettant de le faire passer d'un état monté à un état replié et réciproquement.

Conformément à l'invention, lesdits moyens de pliage et de blocage comportent :
- un premier moyen d'articulation horizontale transversale prévu sur la plate-forme
- un second moyen d'articulation horizontale transversale du montant de guidon - un troisième moyen d'articulation et de rabattement du guidon, moyennant quoi, en passant de l'état monté à l'état plié, on rapproche les roues avant et arrière au voisinage l'une de l'autre par l'articulation de la plate-forme et éventuellement celle du montant de guidon, tandis qu'on escamote grâce aux second et troisième moyen le guidon, de sorte qu'à l'état plié, la plus grande dimension du véhicule est sensiblement celle qui est prise entre les points les plus éloignés des roues rapprochées.

Ainsi, grâce à la combinaison unique conforme à l'invention de l'emplacement du moteur à l'arrière et d'un pliage particulier, comportant notamment une articulation de la plate-forme, il est possible de disposer d'un véhicule à grandes roues et longueur hors-tout raisonnable à l'état monté, dont la longueur se réduit sensiblement lors du pliage grâce au rapprochement des roues rendu possible par la plate-forme articulée. Au contraire, dans les documents précités, la longueur hors-tout est identique à l'état monté ou à l'état plié.

Avantageusement, le premier moyen d'articulation est prévu sur la partie horizontale de la plate-forme, au voisinage du coude ou sur le coude lui-même.

Le second moyen d'articulation est avantageusement prévu entre la partie oblique de la plate-forme et la colonne de direction, de sorte que la colonne puisse pivoter. Il est alors intéressant de prévoir que la roue avant, avec sa fourche, puisse s'escamoter dans la région de la partie oblique de la plate-forme afin de réduire encore l'encombrement. A cet effet, ladite partie oblique n'est pas entièrement dans le plan vertical médian du véhicule, mais s'en écarte soit d'un seul côté, soit avantageusement des deux côtés, la roue se logeant dans l'espace réservé entre ces deux parties latérales.

En variante, le second moyen d'articulation peut consister en une articulation du montant de guidon sur la colonne, celle-ci restant fixe. Dans ce cas, il est avantageux que le montant de guidon ne soit pas entièrement situé dans le plan médian du véhicule, pour permettre son repli sur la roue avant du véhicule. Le montant peut par exemple être constitué par un cadre formé de deux tubes parallèles.

Le troisième moyen d'articulation consiste avantageusement en une articulation souple - mais blocable - du montant du guidon, permettant son rabattement latéral le long du véhicule. Avantageusement cette articulation souple est obtenue par des cardans autorisant un mouvement combiné de deux pivotements, ou mieux par une liaison souple en caoutchouc ou analogue. Un blocage adéquat est associé à cette articulation souple ; par exemple, il est prévu qu'elle rentre, à l'état monté, à l'intérieur de la colonne de direction ou de son prolongement, afin d'empêcher le mouvement de se faire.

Avantageusement, l'ensemble des organes moteurs et d'entraînement de la roue motorisée arrière est logé dans la roue et ou latéralement, sensiblement sans dépasser du cylindre enveloppe de la roue. De telles roues sont connues en soi, par exemple par le document FR-A-2 355 685.

Cependant, selon une disposition originale, la roue motorisée est entraînée par trois galets dont l'un au moins est moteur et est guidée par ces galets grâce à des profils spécifiques complémentaires des galets et de la jante.

Selon une autre disposition, en variante, la plate-forme comporte à sa partie arrière un support démontable désaxé de moteur constitué essentiellement d'une plaque verticale de fixation à laquelle se fixe d'un côté un bloc-moteur et de l'autre un boîtier de réduction et de support de la fusée sur laquelle se monte la roue arrière à voile déporté.

D'autres caractéristiques et avantages de l'invention ressortiront de la description suivante de deux modes de réalisation de l'invention. Il sera fait référence aux dessins annexés sur lesquels :

- la figure 1 est une vue schématique en perspective éclatée de l'ensemble d'un premier mode de réalisation de l'invention,

- les figures 2 à 5 représentent les étapes successives du repliage du véhicule,

- les figures 6 et 7 sont des vues schématiques respectivement de face et en coupe de l'implantation de la transmission primaire dans la roue motorisée.

- les figures 8 et 9 représentent respectivement en vue de face et en coupe, le bâti-moteur et la disposition des galets sur la jante,

- la figure 10 est une vue schématique en perspective éclatée d'un second mode réalisation de l'invention,

- les figures 11 à 14 montrent les étapes successives du repliage du véhicule de la figure 10,

- la figure 15 est une vue en coupe schématique de la roue motorisée du véhicule de la figure 10,

- les figures 16, 17 et 18 sont des vues en perspective éclatée du détail des respectivement premier. second et troisième moyens d'articulation du véhicule de la figure 10.

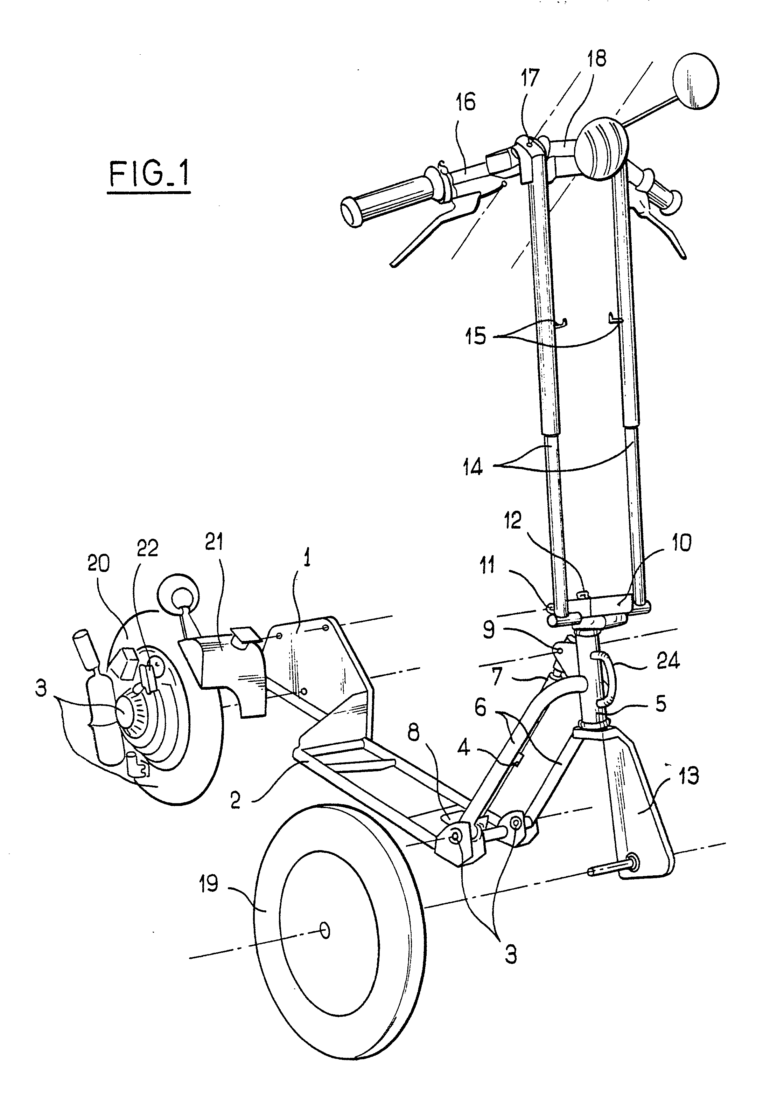

Sur la figure 1. on voit représenté le châssis d'un premier mode de réalisation de véhicule conforme à l'invention.

Un châssis partie basse comprend une plate-forme coudée 2.6 comportant une partie horizontale 2 en cadre tubulaire renforcé équipé d'un plateau antidérapant, destiné à recevoir les pieds du conducteur, et une partie oblique 6. à l'avant de la partie horizontale 2. La partie horizontale 2 comporte à son extrémité arrière un support 1 de roue motorisée 20, ce support 1 étant solidaire de la partie 2 et constitué d'une plaque verticale dotée de trous de fixation. La partie oblique 6 est solidaire à son extrémité avant de la colonne de direction 5, laquelle est équipée de deux coupelles à billes et comporte une poignée 24. La partie oblique 6 et réalisée par deux tubes cintrés et soudés sur la colonne 5 à une de leurs extrémités. tandis qu'ils s'articulent à leur autre extrémité sur des axes horizontaux 3 formés sur la partie 2. Un rigidificateur de châssis 7 est réalisé par deux tubes télescopiques articulés d'une part sur un support 8 lié à la plate-forme basse 2 et d'autre part sur un support 9 de haut de colonne, le coulissement des deux tubes pouvant être verrouillé par un système de verrouillage 4.

La colonne de direction 5 maintient d'une part une potence 10 composée de deux pièces articulées par un axe de rotation 11 et verrouillable par une goupille 12. et d'autre part la fourche avant 13 monobras, solidaire de la potence, et destinée à recevoir sur son axe la roue avant 19.

En partie haute, le châssis comprend un cadre de guidon télescopique 14 composé de deux séries de deux tubes télescopiques verrouillables par des goupilles 15. Le cadre support un guidon 16 articulable grâce à deux axes de rotation 17 et verrouillable par serrage de la poignée 18.

Les roues 19 et 20. équipées de pneumatiques à chambres, sont de relativement grand diamètre, par exemple 32 cm.

La roue arrière motorisée 20 comprend son bloc-moteur, avec son réservoir d'essence 21 situé sur la roue et assurant la fonction de garde-boue, et son lanceur 22 permettant le démarrage du moteur.

Naturellement, le véhicule est aussi équipé de deux systèmes de freinage à commandes séparées, d'un avertisseur sonore, et de feux de signalisation.

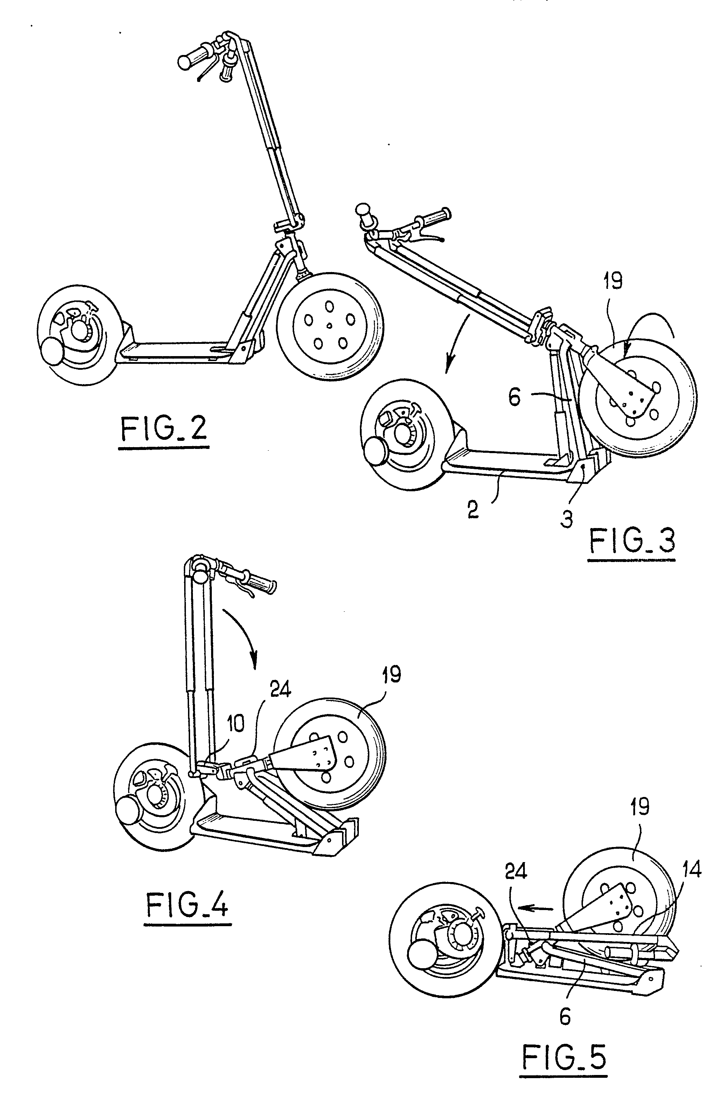

Les figures 2 à 5 représentent les phases successives de pliage du véhicule. Sur la figure 2. le véhicule est représenté en position de conduite, avant toute opération. Les opérations de pliage se décomposent ainsi : On retourne (Fig.3) la roue avant 19 de 180° selon l'axe de la colonne de direction, avant de présenter le guidon dans le sens inverse.

On déverrouille le système de blocage 4 ce qui autorise le pivotement de la partie oblique 6 sur la partie horizontale de plateau 2 grâce à l'articulation 3. On peut ainsi rabattre la roue avant 19 vers l'arrière.

On déverrouille alors le système de blocage 12 de la potence 10 (Fig.4), ce qui permet de rabattre l'ensemble du guidon, avec le cadre téléscopique. sur la roue avant 19. Lorsque ce mouvement s'achève, le cadre du guidon 14 entoure la roue 19.

On déverrouille enfin les goupilles 15 du cadre de guidon afin de rétracter les tubes télescopiques (Fig.5), puis par desserrage de la poignée 18, on rabat le guidon lui-même sous le cadre.

Le véhicule ainsi replié (Fig.5) se transporte aisément à la main à l'aide de la poignée 24, située au-dessus de la colonne de direction, correspondant sensiblement au centre de gravité du véhicule replié.

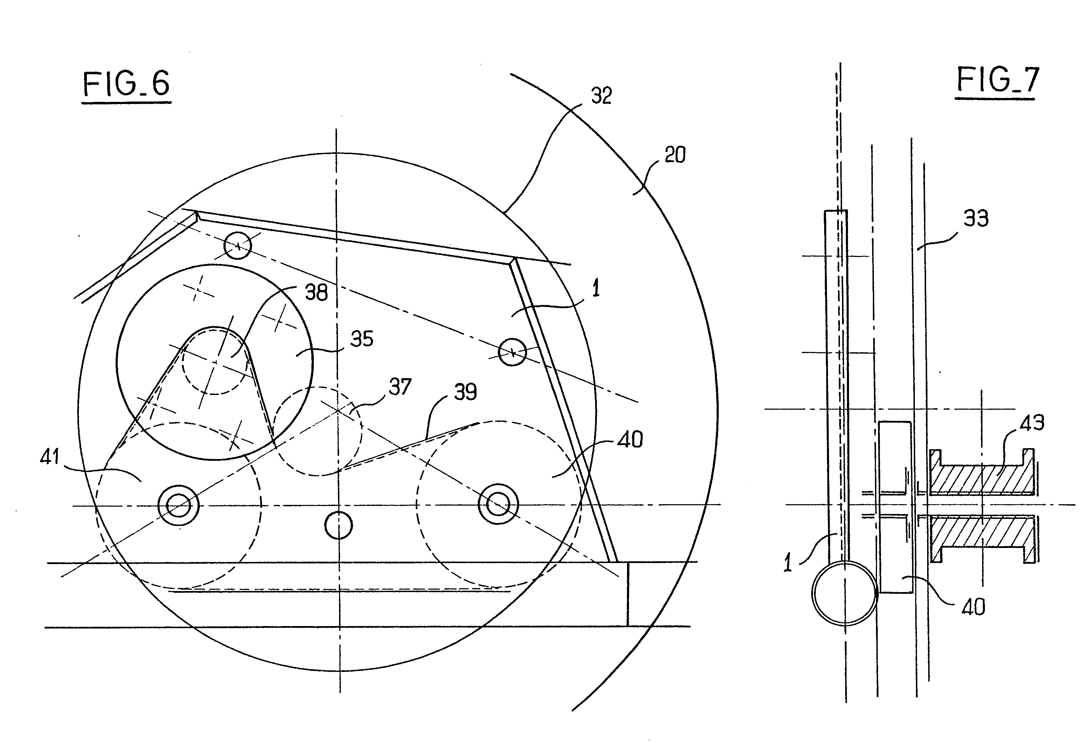

On se reporte maintenant aux figures 6 à 9. La roue motorisée est constituée de trois éléments principaux : le moteur 31, la jante 32 équipée de son pneumatique, et le bâti-moteur 33 assurant la liaison avec le châssis 1.

Le mode d'entraînement choisi est un entraînement par friction de trois galets 42, 43 et 44 sur la bande de roulement intérieure de la jante 32.

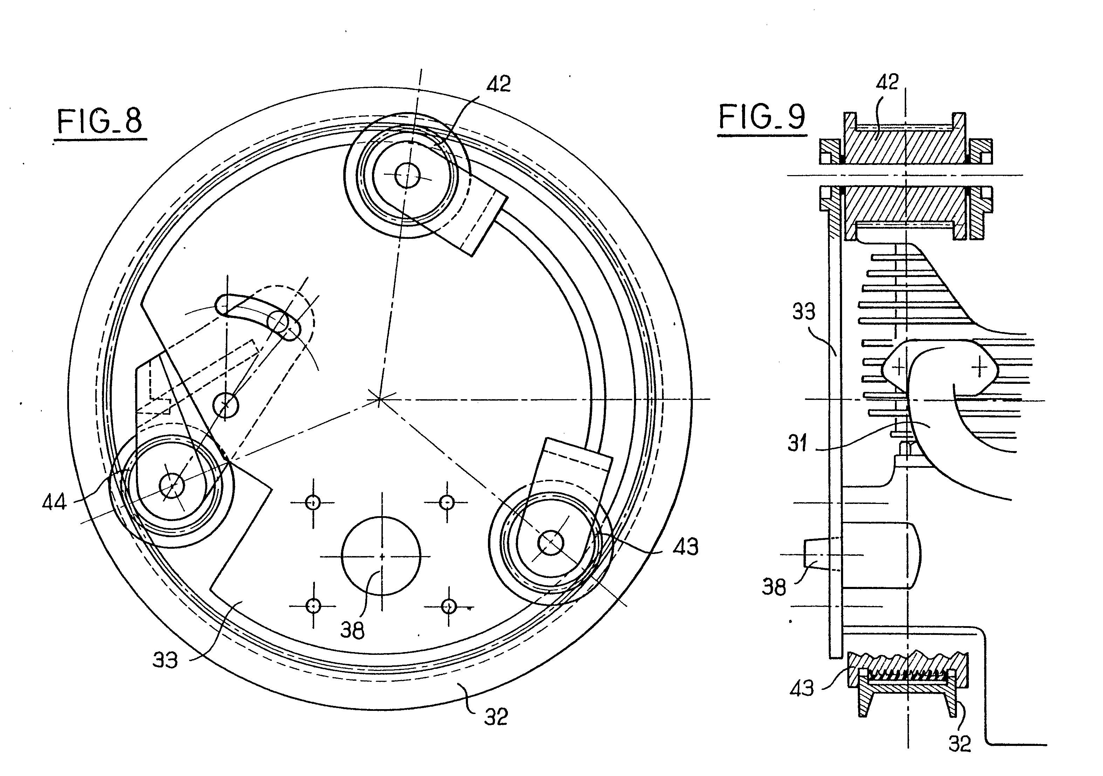

Le moteur 31 (Fig.9) logé au centre de la jante 32 est fixé sur un bâti 33. Il est du type monocylindre à explosion deux temps, inférieur à 30 cm$^3$, refroidi par air forcé.

Le moteur 31 (Fig.6), au travers du bâti 33 (Fig.7), est équipé dd'un embrayage centrifuge à masselotte 35, monté en sortie d'arbre moteur 38.

La transmission primaire s'effectue par le biais d'une courroie crantée 39 (Fig.6), reliant la cloche d'embrayage 35 à deux poulies crantées 40 et 41, disposées symétriquement par rapport à l'axe vertical de la roue et horizontalement à la moitié du rayon de la roue. La courroie crantée dispose d'un tendeur 37 fixé sur le bâti-moteur 33.

La transmission secondaire à elle seule permet l'entraînement de la jante 32 (Fig.8), tout en assurant son guidage latéral. Elle est constituée par trois galets 42, 43 et 44 disposés équilatéralement sur le diamètre intérieur de la jante 32.

Le profil spécifique des galets 42, 43 et 44 (Fig.9) , reçoit l'intérieur de la jante 32 de profil complémentaire à celui des galets 42, 43 et 44.

Deux galets 42 et 43 (Fig.8) sont solidaires des poulies crantées 40 et 41 de la transmission primaire et mus par le moteur 31, permettant d'entraîner la jante 32 par friction sur la bande de roulement.

Le troisième galet 44 (Fig.8) permet de rattraper les jeux éventuels et de contrôler la pression d'entraînement et les frottements des galets moteurs 42 et 43 sur la bande de roulement de la jante 32.

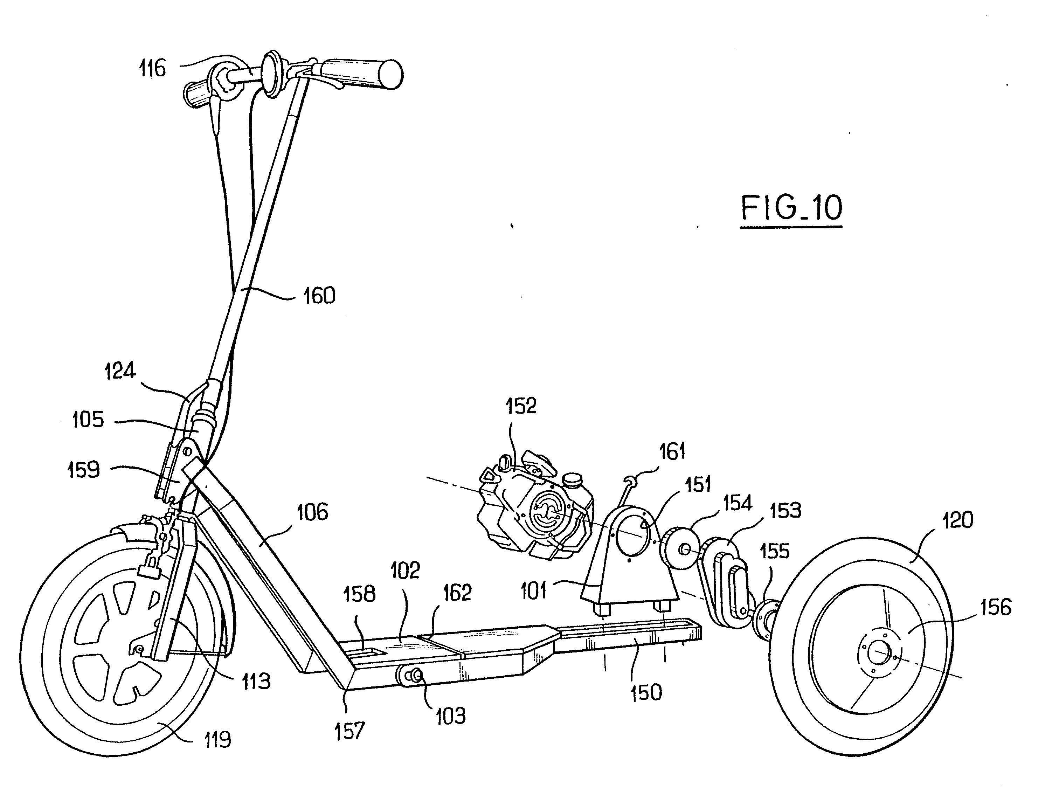

On va maintenant décrire, en regard des figures 10 et suivantes, un second mode de réalisation de l'invention qui diffère du premier d'une part par la construction de son châssis, d'autre part par le fait qu'il permet d'utiliser un bloc-moteur classique disponible dans le commerce.

Le véhicule comprend une plate-forme coudée composée d'une partie horizontale de plateau 102 et d'une partie ayant oblique 106.

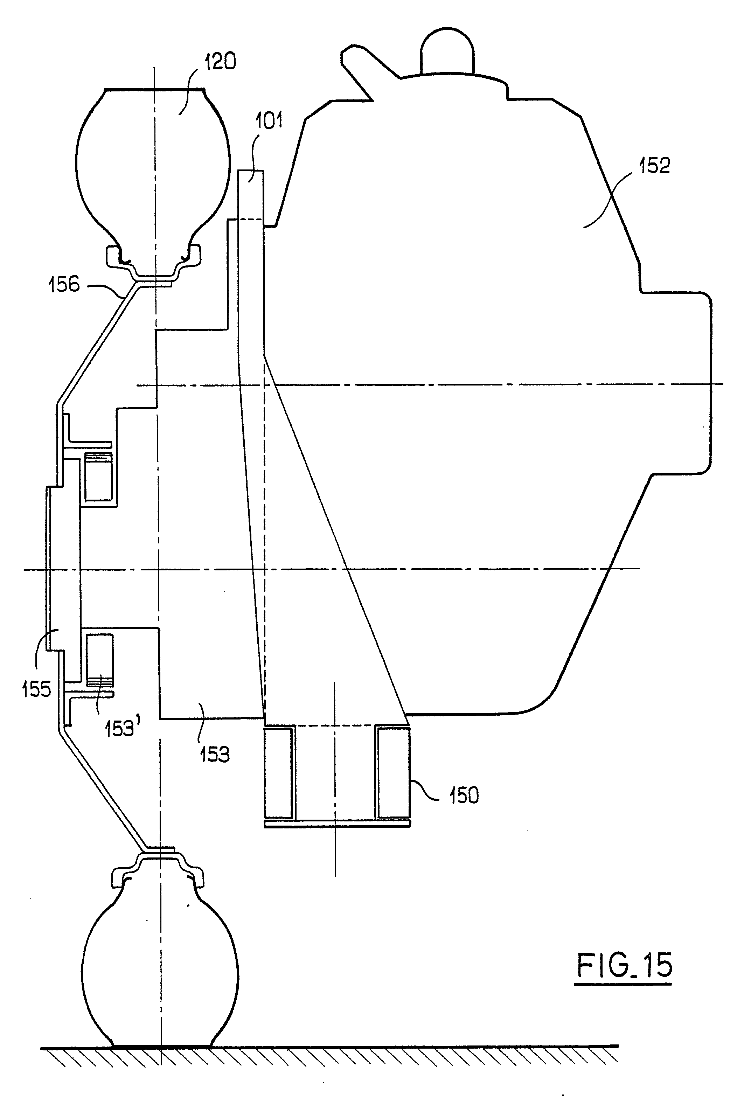

La partie de plateau 102 comporte une zone sensiblement rectangulaire pour les pieds, délimitée par un cadre tubulaire, qui se rétrécit à l'arrière sur un côté du rectangle pour former une extension ou queue déportée 150 dans laquelle vient se loger un support universel ou bâti-moteur 101 formé essentiellement d'une plaque verticale rigide percée d'une ouverture 151, et d'orifices de fixation. Le support 101 (cf aussi la figure 15) permet la fixation, d'un côté, du bloc-moteur complet 152 caréné (par exemple le bloc-moteur à essence 2 temps monocylindre TG 33 D de 33,3 cm$^3$ de KAWASAKI ®), et de l'autre côté, du support 153 de la cloche d'embrayage 154. Le support 153 contient également le boîtier de réduction, et sert aussi de support à la fusée 155 de roue, ainsi qu'au système de freinage 153'. La roue 120 à pneumatique à chambre, est à voile 156 déporté, ce qui permet de loger la roue 120 dans l'axe longitudinal du véhicule.

La partie 102 est articulée sur un axe longitudinal transversal 103 doté d'un moyen de blocage. On notera que le repose-pied disposé à l'intérieur du cadre de la partie 102 est séparé en deux parties indépendantes le long d'une ligne située en arrière de l'articulation 103, de manière que le bord arrière de la partie avant du repose-pied serve d'appui à terre lors du pliage du véhicule, comme on le verra plus loin.

L'articulation 103 est à peu près à mi-distance entre ladite ligne de séparation et le coude 157 reliant la partie horizontale 102 à la partie oblique 106 constituée de deux tubes écartés de manière à pouvoir livrer passage à la roue avant du véhicule lors du pliage. Dans le même but, la partie avant du repose-pied peut comporter une échancrure 158.

Les tubes de la partie 106 se rapprochent à l'avant où ils sont solidaires d'une pièce 159 de support articulé et de blocage de la colonne de direction 105. La colonne 105 comporte la poignée de transport 124.

La colonne de direction 105 supporte en rotation de manière connue une fourche avant classique 113 dans laquelle est montée la roue avant 119, solidaire de la fourche avant 113. Un montant de guidon 160, coaxial à la colonne de direction 105 supporte en bout un guidon classique 116 équipé de ses accessoires.

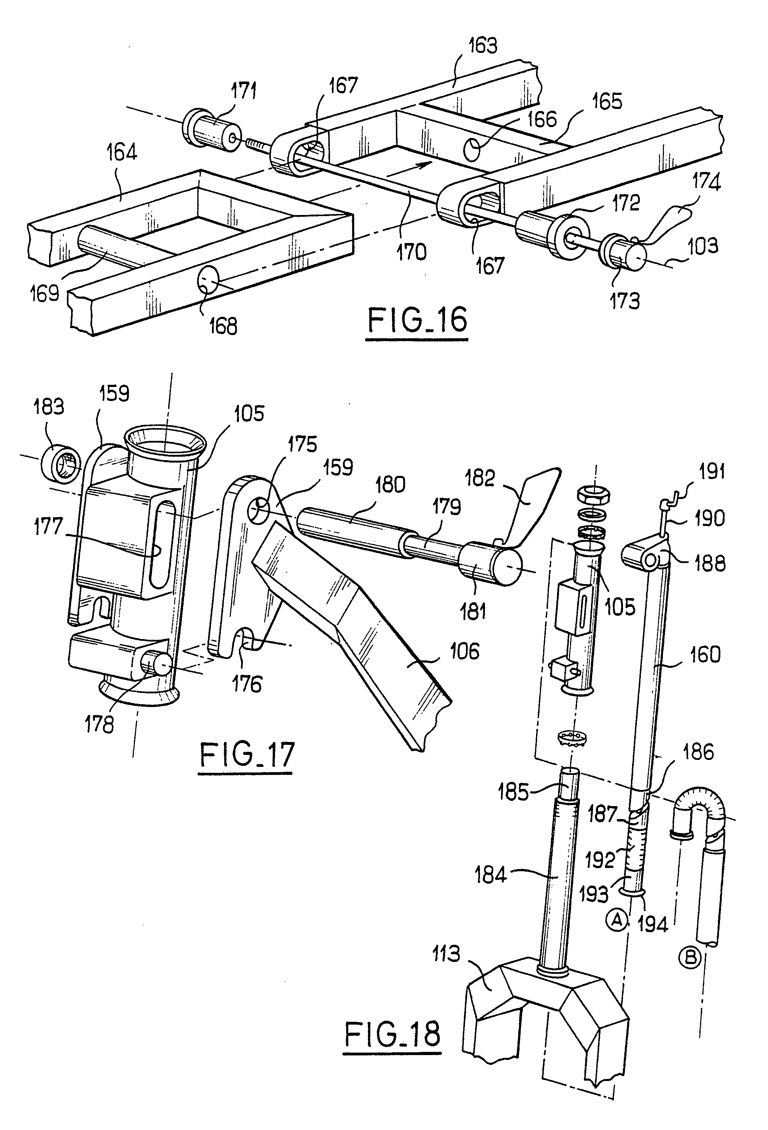

On va maintenant décrire, à l'aide des figures 16 à 18, le détail des trois moyens d'articulation et de blocage du véhicule de la figure 10.

On voit sur la figure 16 le premier moyen d'articulation entre la partie arrière 163 et la partie avant 164 de la partie horizontale de plate-forme 102. La partie arrière 163 comporte une barre transversale 165 entre deux bras, de manière à former un U ouvert dans lequel peut se loger la partie 164. Celle-ci comporte à l'arrière un pion (non visible sur le dessin) qui peut s'engager dans un trou 166 formé dans la barre 165.

Les deux bras de la partie 163 comportent à leurs extrémités deux lumières oblongues longitudinales 167. Quand la pièce 164 est engagée dans la pièce 163, deux orifices transversaux 168, éventuellement reliés par un manchon creux 169, viennent s'aligner sur les lumières 167. Une tige de manoeuvre 170 peut traverser l'ensemble, et est vissée à une extrémité dans un embout 171 pouvant glisser dans la lumière 167, tandis qu'à son autre extrémité, elle passe dans un autre embout glissant 172 pour se fixer dans une came tournante 173 munie d'une manette 174. En tournant la manette 174 dans un sens ou dans l'autre, on provoque le serrage ou le desserrage de la tige 17, donc le serrage des branches de la partie 163 contre la partie intérieure 164, ou son desserrage. Quand les parties 163 et 164 sont serrées, elles sont solidaires l'une de l'autre et l'articulation est bloquée par la coopération du pion et de son logement 166. Quand les parties 163 et 164 sont desserrées, on peut par une légère translation (possible grâce à la forme oblongue des lumières 167) déloger le pion, et l'articulation autour de l'axe 103 est alors possible.

Le deuxième moyen d'articulation, représenté sur la figure 17, permet d'articuler et de bloquer en rotation la colonne de direction 105 par rapport au cadre oblique 106, par l'intermédiaire des pièces 159 : celles-ci sont des plaques sensiblement triangulaires comportant d'une part un orifice 175 près de leur sommet supérieur, et une échancrure 176 à leur sommet inférieur. La colonne de direction 105 comporte une première protubérance dans laquelle est formée une lumière oblongue verticale 177, et une seconde protubérance comportant deux pions 178 d'ancrage horizontaux latéraux.

Il est prévu par ailleurs une tige 179, susceptible de coulisser dans un manchon-entretoise 180 destiné à passer à l'intérieur de la lumière 177; la tige 179 est solidaire à une extrémité d'une came de manoeuvre 181 à manette 182, et, à l'autre extrémité, d'une bague d'arrêt 183 dans laquelle elle peut se visser. A l'état monté, la tige 179 traverse les orifices 175 et, avec l'entretoise 180, la lumière 177, et permet par le jeu de la came de serrage 181, de serrer les pièces 159 contre la colonne de direction 105 (et les flancs des protubérances qu'elle porte). Le blocage de l'articulation se fait par la coopération des pions 178 et des échancrures 176.

Le troisième moyen d'articulation, visible sur la figure 18, permet le rabattement latéral du montant de guidon 160. La fourche avant 113 est montée en rotation dans la colonne de direction 105 grâce à un axe 184 de fourche creux prolongé par un manchon 185 de plus petit diamètre. Le montant de guidon 160, quant à lui, comporte à sa partie inférieure un prolongement constitué de deux pièces 186-187 complémentaires en sifflet. La pièce 186 est solidaire de la potence 188 de guidon, et est traversée par une tige 190 terminée par une manette 191, la tige se prolongeant au-delà de la pièce 186 pour se fixer dans la pièce 187. Celle-ci comporte un bloc élastique 192, terminé par un embout 193 à bride 194.

La pièce 187 est logée dans l'axe 184 de fourche ou dans le manchon 185, où elle peut coulisser librement si la manette n'est pas serrée. Elle est empêchée de sortir du manchon 185 grâce à la bride 194 qui vient buter contre l'épaulement inférieur du manchon.

Quand on serre la manette 191, les parties en sifflet 186,187 se rapprochent et coopèrent pour se fixer dans l'axe 184 et ainsi bloquer le montant de guidon 160 par rapport à l'axe 184 de fourche (position A).

Pour procéder au rabattement du montant de guidon 160 (position B), on desserre la manette 191, on extrait au maximum (jusqu'à la butée) le montant 160 de son logement, ce qui dégage le bloc élastique de la colonne de direction et de l'embout 185, et permet donc de placer le montant dans la position rabattue désirée.

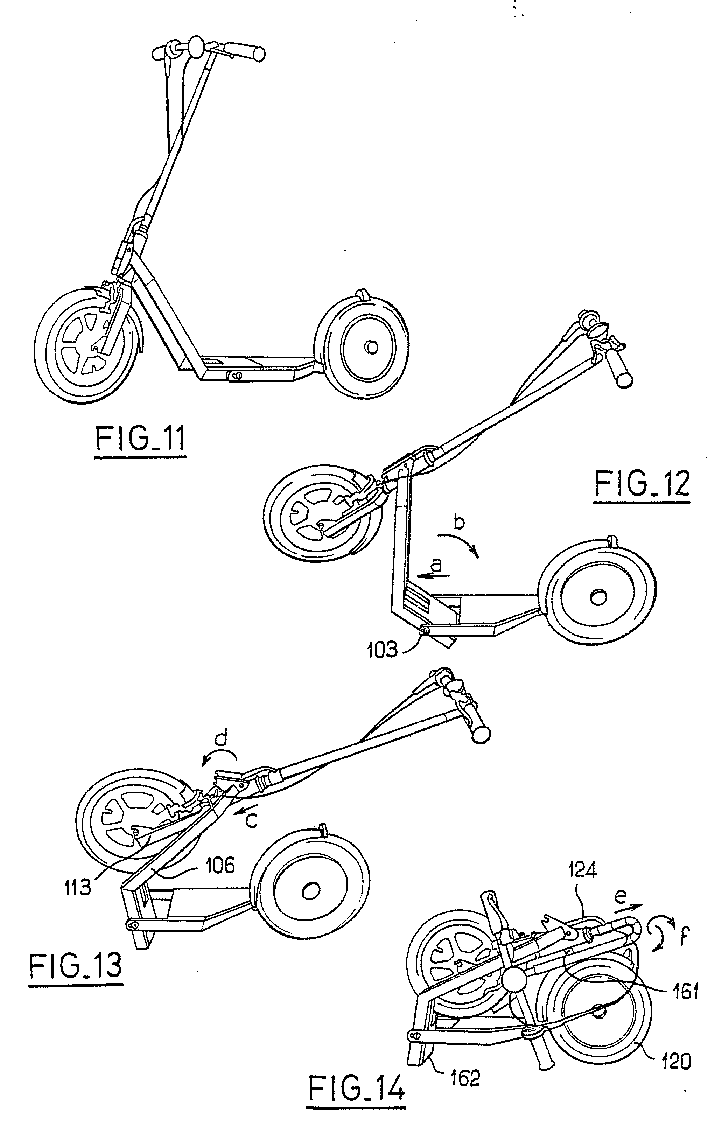

Les phases du pliage seront maintenant expliquées en regard des figures 11 à 14. On voit sur la figure 11, le véhicule à l'état monté, les trois moyens d'articulation étant en position bloquée.

On commence (figure 12) par déverrouiller le premier moyen de blocage de la plate-forme en tournant la manette 174 d'un quart de tour : une légère translation (flèche a) du cadre de colonne 106 le fait sortir de son logement et permet son pivotement (flèche b) vers la roue arrière, autour de l'articulation 103.

On déverrouille alors (figure 13) de deuxième moyens de blocage de la colonne de direction en tournant la manette 182 de blocage d'un quart de tour : une légère translation (flèche c) fait sortir la colonne 105 de son logement, et permet son basculement (flèche d) au cours duquel la fourche avant 113 peut passer entre les montants de la partie oblique 106 du cadre de colonne.

Enfin, on déverrouille le guidon en tournant la manette 191 d'un quart de tour. Une translation (flèche e) le fait sortir de son logement en dégageant les moyens de rabattement. Il suffit alors de rabattre (flèche f) le guidon dans un plan parallèle aux roues, le long du véhicule, par un double mouvement de torsion et de pivotement. On peut fixer la colonne de direction en position repliée grâce à un crochet 161 prévu sur la pièce 101 de support de roue motorisée.

De même, des moyens d'accrochage non représentés permettent de maintenir le guidon dans sa position rabattue.

L'ensemble peut être soulevé aisément par la poignée de transport 124.

L'ensemble replié repose en équilibre stable sur la roue motorisée arrière et sur le bord arrière 162 de la partie avant basculée du repose-pied.

Comme on le voit, le pliage conforme à l'invention ainsi que la disposition des organes moteurs de la roue arrière, dans le volume de celle-ci ou latéralement mais sensiblement sans dépasser du cylindre extérieur enveloppe de roue, permettent d'obtenir une compacité maximale malgré l'encombrement important des roues de grand diamètre, lesquelles, à l'état replié, se trouvent relativement voisines.

A titre d'exemple non limitatif, un véhicule conforme à l'invention peut avoir, à l'état déplié, une longueur hors-tous de 1,2 m et une largeur hors-tout de 0,51 m au guidon, avec un empattement de 0,88 m, pour un poids total de 13 kg, y compris le poids du moteur. A l'état plié, sa longueur hors-tout n'est plus que de 0,66 m (soit légèrement plus que deux diamètres de roues), sa hauteur 0,39 m et sa largeur 0,33 m.

## Revendications

1. Véhicule motorisé pliant à deux roues, du type comprenant :
- une plate-forme coudée centrale allongée sur laquelle peuvent reposer les pieds d'un conducteur, comportant une première partie horizontale (2,102) reliée à l'avant par un coude (157) à une seconde partie oblique (6,106), la partie horizontale comportant à l'arrière des moyens de montage (1,101) d'une roue arrière motorisée (2,120), la partie oblique étant reliée à l'avant à une colonne de direction (5,105), la roue motorisée (20,120) étant entraînée par un moteur placé à proximité,
- la colonne de direction (5,105), dans laquelle est monté l'axe d'une fourche (13,113) avant équipée d'une roue avant (19,119) et un montant (14,160) de guidon solidaire en rotation de la fourche (13,113) et muni à sa partie supérieure d'un guidon de direction (16,116),
- des moyens de pliage et de blocage du véhicule permettant de la faire passer d'un état monté à un état replié et réciproquement,
caractérisé en ce que lesdits moyens de pliage et de blocage comportent :
- un premier moyen d'articulation (3,103) horizontale transversale prévu sur la plate-forme (2,102),
- un second moyen d'articulation (10,159) horizontale transversale du montant de guidon, et
- un troisième moyen d'articulation et de rabattement du guidon (16,116),

moyennant quoi, en passant de l'état monté à l'état plié, on rapproche les roues avant (19,119) et arrière (20,120) au voisinage l'une de l'autre par l'articulation de la plate-forme et éventuellement celle du montant (14,160) de guidon, tandis qu'on escamote grâce aux second et troisième moyens le guidon (16,116), de sorte qu'à l'état plié, la plus grande dimension du véhicule est sensiblement celle qui est prise entre les points les plus éloignés des roues rapprochées (19,119:20,120).

2. Véhicule selon la revendication 1, caractérisé en ce que le premier moyen d'articulation (103) est prévu sur la partie horizontale (2,102) de la plate-forme, au voisinage du coude (157).

3. Véhicule selon l'une quelconque des revendications 1 ou 2, caractérisé en ce que le second moyen d'articulation (159) est prévu entre la partie oblique (106) de la plate-forme et la colonne de direction (105).

4. Véhicule selon l'une quelconque des revendications 1 à 3, caractérisé en ce que le troisième moyen d'articulation consiste en une articulation souple du montant (160) de guidon.

5. Véhicule selon l'une quelconque des revendications 1 à 4, caractérisé en ce que les organes moteurs et d'entraînement de la roue motorisée (20,120) arrière sont intégralement logés dans la roue et ou latéralement à celle-ci.

6. Véhicule selon la revendication 5, caractérisé en ce que la roue motorisée (20) est entraînée par trois galets (42,43.44) dont l'une au moins est moteur et guidée par ces galets grâce à des profils spécifiques complémentaires des galets et de la jante (32).

7. Véhicule selon la revendication 5, caractérisé en ce que la plate-forme comporte à sa partie arrière un support (101) démontable désaxé de moteur constitué d'essentiellement d'une plaque plaque verticale de fixation à laquelle se fixe d'un côté un bloc-moteur (152) et de l'autre de boîtier de réduction et support de la fusée sur laquelle se monte la roue arrière à voile déporté.

# FIG.1

FIG_2

FIG_3

FIG_4

FIG_5

**FIG_7**

**FIG_6**

FIG.9

FIG.8

FIG.10

EP 0 362 033 A1

FIG_11

FIG_12

b

a

103

d

c

113

106

FIG_13

124

e

f

161

120

162

FIG_14

FIG. 15

FIG.16

FIG.17

FIG.18

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 087 108 (F.J. WINCHELL) * Colonne 1, ligne 66 - colonne 4, ligne 68 * | 1 | B 62 K 15/00 B 62 M 7/12 |
| A | | 2 | |
| D,Y | GB-A-2 116 495 (TAKESHI IMAI) * Figures 1-7; page 2, ligne 14 - page 3, ligne 22 * | 1 | |
| A | | 3 | |
| P,A D | EP-A-0 300 650 (PATMONT) * Figures 1-5; colonne 3, ligne 13 - colonne 5, ligne 40 * | 4 | |
| A,D | FR-A-2 478 569 (SOULIER) * Figures; planches 1,2; pages 1,2 * | 1 | |

**DOMAINES TECHNIQUES RECHERCHES (Int. Cl.5)**

B 62 K
B 62 M

**Le présent rapport a été établi pour toutes les revendications**

| Lieu de la recherche | Date d'achèvement de la recherche | Examinateur |
|---|---|---|
| LA HAYE | 04-01-1990 | VANNESTE M.A.R. |